# EUROPEAN PATENT SPECIFICATION

(11) **EP 0 586 000 B1**
(45) Date of publication and mention of the grant of the patent: **22.12.1999**
(21) Application number: 93202348.4
(22) Date of filing: 09.08.1993
(51) Int. Cl.: B32B 5/12

(54) **Non-metallic thermally conductive honeycomb thrust reverser inner wall**
Innere Schicht einer Schutsumkehrvorrichtung aus nichtmetallischen, wärmeleitender Honigwabenstruktur
Panneau intérieur d'un dispositif d'inversion de poussée avec un nid d'abeilles thermiquement conducteur non-métallique

(30) Priority: 10.08.1992 US 926444
(43) Date of publication of application: 09.03.1994
(73) Proprietor: THE BOEING COMPANY, Seattle, Washington 98124-2207 (US)
(72) Inventor: Moore, Francis W., Seattle, WA 98125 (US)
(74) Representative: Hoijtink, Reinoud

(56) References cited:
- WO-A-82/00974
- WO-A-85/03032
- WO-A-88/04707
- DE-A- 3 625 534
- GB-A- 2 019 983
- US-A- 4 052 523
- US-A- 4 495 764
- PATENT ABSTRACTS OF JAPAN vol. 16, no. 242 (M-1259)3 June 1992 & JP-A-04 053 736 (MITSUBISHI ELECTRIC CORP.) 21 February 1992

## Description

The present invention relates to a thrust reverser inner wall comprising a sandwich structure, wherein said sandwich structure comprises a perforated carbon fiber reinforced non-metallic top layer, a thermally conductive honeycomb core, and a carbon fiber reinforced non-metallic base layer. Such an inner wall for a thrust reverser is generally known in the art.

A typical commercial airplane gas turbine engine includes a thrust reverser cowling nacelle. The nacelle structure consist of an inner and outer cowl joined with bifurcations. The engine fan airstream runs through the annular cavity between the two cowls. The inner cowl or wall covers the engine case, accessories, and ducting installed therein. Because the engine case is very hot, up to 590 degrees C (1100 degrees F), the inside surface of the inner cowl, referred to as the thrust reverser inner wall, is exposed to high radiative energy.

Thrust reverser inner wall structures have generally been made with aluminum skin, an aluminum honeycomb core, and a layer of applied insulation on the hot surface adjacent to the engine case. This metallic thrust reverser inner wall has been effective in conducting heat away from the engine to the surface adjacent to the fan airstream. However, the all metallic structure is heavy, resulting in high weight penalties. In addition, the aluminum is susceptible to corrosion damage.

To reduce the weight penalties and improve acoustic characteristics, the thrust reverser inner wall has been built with an aluminum honeycomb core sandwiched between carbon fiber layers. As a result of the carbon fibers adjacent to the aluminum core, the wall structure has been susceptible to galvanic corrosion, particularly in the presence of moisture. Such corrosion creates a potential for subsequent structural failure of the aluminum core that is not acceptable.

Several proposals for sandwich panels having a non-metallic honeycomb core are described in the prior art. In JP-A-4053736 a honeycomb sandwich panel is disclosed having CFR skins and a CFR core arranged therebetween. In this prior art document it is stated that the thermal conductivity of the sandwich panel may be improved (presumably vis-a-vis a similar non-metallic honeycomb sandwich panel) by equalizing the expansion coefficient of the skin and the honeycomb core. This document contains no indication that a non-metallic honeycomb core per se may have sufficient thermal conductivity for use in a thrust reverser inner wall.

In WO-A-8503032 a composite material structure is disclosed having an integral fire protection. This structure comprises a honeycomb sandwich panel having skins which include a layer of ceramic material and a CFR layer, and having a core that comprises a GFR honeycomb. The structure of this panel is chosen such as to provide a high thermal insulation, rather than a high thermal conductivity.

In WO-A-8200974 a composite honeycomb sandwich panel is disclosed having CFR skins and a nylon honeycomb core. In this document the galvanic corrosion problems associated with material comprising carbon fibers and aluminum in direct contact are recognized, and are solved by substituting aramid fibers for the carbon fibers in areas where aluminum fasteners are used for connecting the sandwich panel to other structures. This prior art document does not contain any mention of the thermal conductivity characteristics of the panel.

US-A-4495764 discloses a composite honeycomb sandwich panel for use as an insulation wall assembly for instance for a solid rocket motor case. This panel has a non-metallic honeycomb core which is meant to provide a thermal insulation. Therefore, this document does not contain any indication that such panel may have a high thermal conductivity.

Finally, in GB-A-2019983 a honeycomb sandwich panel for sound attenuation in an engine nacelle is disclosed. It is stated that the honeycomb core of this sound attenuation panel may be made from either a metallic or a non-metallic material, but the document does not contain any indications regarding the thermal conductivity of the panel.

Accordingly, the present invention seeks to provide a thrust reverser inner wall structure that substantially reduces the weight penalty realized, avoids susceptibility to corrosion, maintains the strength of the wall, and maintains adequate thermal conductivity, thereby reducing the need for insulation.

In accordance with the subject invention, this is accomplished in a thrust reverser inner wall of the type described above, in that said honeycomb core is made of a non-metallic material comprising impregnated carbon pitch fibers and having a high thermal conductivity.

In a preferred embodiment said carbon pitch fiber honeycomb core has a thermal conductivity from 1.09 to 2.05 W/m.K. The wall's high level of thermal conductivity is such that the engine heat is conveyed to the perforated carbon fiber top layer. Engine fan air passing over the top layer acts as a heat sink wherein enough heat is carried away from the engine to minimize the need for insulation on the engine side of the wall. Preferably, said carbon fiber reinforced non-metallic top layer comprises an epoxy impregnated carbon fabric.

The invention also provides a sandwich structure for use in a thrust reverser inner wall of the type described above. Such sandwich structure is described in claim 5.

Finally, the invention relates to a method of manufacturing a thrust reverser inner wall. Such a method is defined in claim 8.

The above and other advantages of the present invention will be more clearly understood from the detailed description of the preferred embodiment that follows taken in conjuction with the features shown in the attached drawings.
Figure 1 is a cross section of a typical commercial aircraft jet power plant.
FIGURE 2 is art isometric cut away view of the subject non-metallic thrust reverser inner wall.

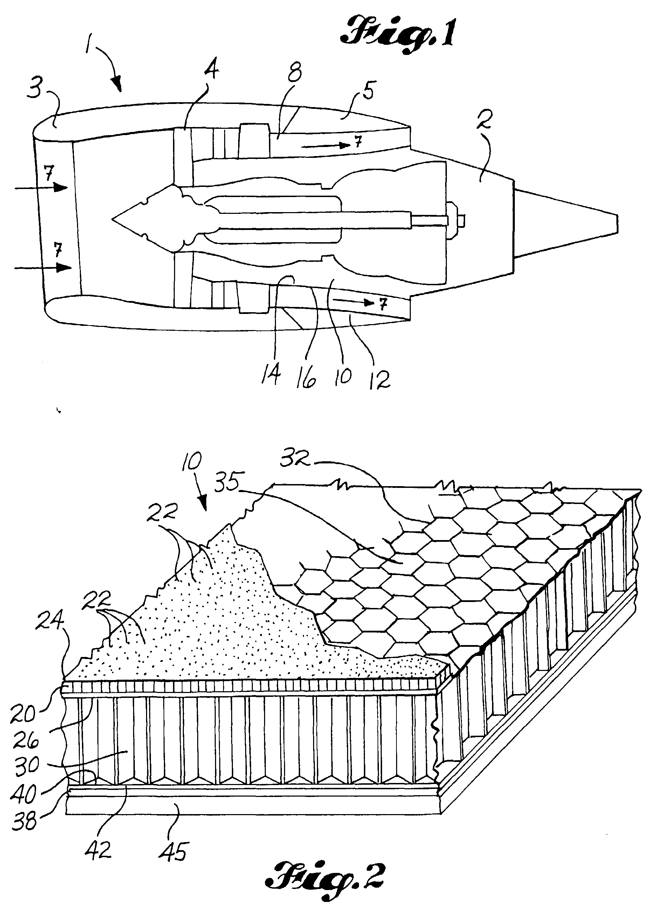

As seen in Figure 1, a typical commercial aircraft jet power plant 1 comprising the engine 2, associated cowling 3, fan 4, and thrust reverser cowling 5. The fan 4 draws air through the power plant 1 as indicated by the fan air flow arrows 7. The fan air flow 7 enters cowling 3 and passes through the annular fan air bypass duct 8 between the thrust reverser inner wall 10 and the thrust reverser outer wall 12.

While the power plant 1 is operating, the engine 2 generates a substantial amount of heat and reaches up to 590 degrees C (1100 degrees F). The inside surface 14 of the thrust reverser inner wall 10 is directly exposed to the high radiative energy. To reduce the need for insulation (not shown) on the inside surface 14, the subject thrust reverser inner wall 10 is designed to conduct the heat away from the engine 2, through the thrust reverser inner wall 10 to the relatively cold outer surface 16 of the thrust reverser inner wall 10. The cold fan air flow 7 passing over the outer surface 16 acts as a heat sink. As such, high thermal conductivity of thrust reverser inner wall 10 results in less insulation and smaller weight penalties.

Weight penalties associated with the thrust reverser inner wall 10 are also substantially reduced by utilizing composite materials for the honeycomb core rather than aluminum or other metals. The thrust reverser inner wall 10 of the subject invention, as described below, maintains high thermal conductivity while utilizing all non-metallic components.

As seen in Figure 2, thrust reverser inner wall 10 is a sandwich structure with a top layer 20 of perforated carbon fiber reinforced epoxy. Perforations 22 are manufactured into the top layer 20 when the layer is partially cured on a perforation layup tool (not shown). The perforations 22 are designed to maintain proper acoustic properties of the thrust reverser inner wall 10. When installed in the power plant 1, the top face 24 of perforated carbon fiber top layer 20 directly interfaces with the fan air flow 7.

A layer of reticulated adhesive 26 adheres the perforated carbon fiber top layer 20 to a thermally conductive non-metallic carbon pitch fiber honeycomb core 30. In the preferred embodiment, adhesive layer 26 comprises BMS 5-137 Structural Adhesive for Acoustic Panels as defined in The Boeing Company specification BAC 5514-5137.

Thermally conductive non-metallic impregnated carbon pitch fiber honeycomb core 30 consists of impregnated fabric reinforced sheets 32, corrugated to form specific honeycomb cells 35, then bonded with a polyimide adhesive resin and coated with a polyimide resin in accordance with The Boeing Company specification BMS 8-339. The carbon pitch fiber honeycomb core 30 has thermal conductivity ranging from 1.9 to 2.05 W/m x degrees K. This thermal conductivity characteristic transmits sufficient heat to be removed by fan airflow 7, thereby reducing the weight penalty associated with a resulting thick insulation layer.

The carbon pitch fiber honeycomb core 30 in the preferred embodiment, as specified in The Boeing Company specification BMS 8-339, is manufactured by Hexcel Corporation, Graham, TX, as part numbers HFT-GP-327. Compared to art aluminum honeycomb core, the Hexcel carbon pitch fiber honeycomb core 30 material reduces the weight penalty by 26% and is not susceptible to corrosion.

A base layer 38 of non-metallic, nonperforated carbon fiber reinforced fabric is adhered to the bottom surface 40 of carbon pitch fiber honeycomb core 30 by a layer of adhesive 42. In the preferred embodiment, the adhesive used is BMS 8-245 Adhesive for Composite Bonding, as defined by The Boeing Company specification BMS 8-245.

The thrust reverser inner wall 10 sandwich structure described above is fabricated in accordance with The Boeing Company specification BAC 5317-6.

The preferred embodiment of the thrust reverser inner wall 10 has an insulation layer 45 adhered to the bottom of base layer 38, wherein the insulation layer is the layer adjacent and closest to the engine 2 when installed in the power plant.

## Claims

1. A thrust reverser inner wall (10) comprising a sandwich structure, wherein said sandwich structure comprises a perforated carbon fiber reinforced non-metallic top layer (20), a thermally conductive honeycomb core (30), and a carbon fiber reinforced non-metallic base layer (38), **characterized in that** said honeycomb core (30) is made of a non-metallic material comprising impregnated carbon pitch fibers and having a high thermal conductivity.

2. The thrust reverser inner wall (10) of claim 1, **characterized in that** said carbon pitch fiber honeycomb core (30) has a thermal conductivity from 1.09 to 2.05 W/m.K.

3. The thrust reverser inner wall (10) of claim 1 or 2, **characterized in that** said carbon fiber reinforced non-metallic top layer (20) comprises an epoxy impregnated carbon fabric.

4. The thrust reverser inner wall (10) of any one of the preceding claims, **characterized by** an insulation layer (45) adhered to said base layer (38).

5. A thrust reverser inner wall sandwich structure comprising a top layer (20), a honeycomb core (30) with a top and bottom surface (40), and a base layer (38), said top layer (20) comprising a perforated epoxy impregnated carbon fiber reinforced fabric, said top layer (20) being adhered with adhesive means (26) to said top surface of said honeycomb core (30), said base layer (38) comprising a nonperforated epoxy impregnated carbon fabric, said base layer (38) being adhered with adhesive means (42) to said bottom surface (40) of said honeycomb core (30), **characterized in that** said honeycomb core (30) is made of a thermally conductive non-metallic material comprising impregnated carbon pitch fibers.

6. The sandwich structure of claim 5**, characterized in that** said carbon pitch fiber honeycomb core (30) has a thermal conductivity from 1.09 to 2.05 W/m.K and in that said core (30) is adhesive bonded to said top and base layers (20, 38).

7. The sandwich structure of any one of the preceding claims, **characterized by** an insulation layer (45) adhered to said base layer (38).

8. Method of manufacturing a thrust reverser inner wall (10), comprising the steps of forming a thermally conductive honeycomb core (30), adhering a carbon fiber reinforced, non-metallic base layer (38) to said honeycomb core (30) and adhering a perforated carbon fiber reinforced non-metallic top layer (20) to said honeycomb core (30), **characterized in that** said honeycomb core (30) is made of a non-metallic material comprising impregnated carbon pitch fibers and having a high thermal conductivity.

9. Method according to claim 8, **characterized in that** as said carbon pitch fiber material (30) a material is selected having a thermal conductivity from 1.09 to 2.05 W/m.K.

## Patentansprüche

1. Schubumkehreinrichtungsinnenwand (10), umfassend eine Schichtungs- bzw. Sandwichstruktur, worin die Schichtungs- bzw. Sandwichstruktur eine perforierte kohlenstoffaserverstärkte nichtmetallische Oberseitenschicht (20), einen thermisch leitfähigen Waben- bzw. Zellenkern (30) und eine kohlenstoffaserverstärkte nichtmetallische Basisschicht (38) umfaßt, dadurch **gekennzeichnet,** daß der Waben- bzw. Zellenkern (30) aus einem nichtmetallischen Material hergestellt ist, das imprägnierte Kohlenstoffteerfasern umfaßt bzw. enthält und eine hohe Wärmeleitfähigkeit hat.

2. Schubumbkehreinrichtungsinnenwand (10) nach Anspruch 1, dadurch **gekennzeichnet,** daß der Kohlenstoffteerfaser-Waben- bzw. -Zellenkern (30) eine Wärmeleitfähigkeit von 1,09 bis 2,05 W/m.K. hat.

3. Schubumkehreinrichtungsinnenwand (10) nach Anspruch 1 oder 2, dadurch **gekennzeichnet,** daß die kohlenstoffaserverstärkte nichtmetallische Oberseitenschicht (20) ein epoxyimprägniertes Kohlenstofftextilerzeugnis bzw. -gewebe umfaßt bzw. enthält.

4. Schubumkehreinrichtungsinnenwand (10) nach irgendeinem der vorhergehenden Ansprüche, **gekennzeichnet** durch eine Isolationsschicht (45), die an der Basisschicht (38) anhaftet bzw. klebt.

5. Schubumkehreinrichtungsinnenwand-Schichtungs- bzw. -Sandwichstruktur, umfassend eine Oberseitenschicht (20), einen Waben- bzw. Zellenkern (30) mit einer Oberseiten- und Unterseitenoberfläche (40), und eine Basisschicht (38), wobei die Oberseitenschicht (20) ein perforiertes epoxyimprägniertes kohlenstoffaserverstärktes Textilerzeugnis bzw. -gewebe umfaßt bzw. enthält, wobei die Oberseitenschicht (20) mit Haft- bzw. Klebemittel (26) an der Oberseitenoberfläche des Waben- bzw. Zellenkerns (30) zum Anhaften gebracht bzw. angeklebt ist, wobei die Basisschicht (38) ein nichtperforiertes epoxyimprägniertes Kohlenstofftextilerzeugnis bzw. -gewebe umfaßt, wobei die Basisschicht (38) mit Klebemittel (42) an der Unterseitenoberfläche (40) des Waben- bzw. Zellenkerns (30) zum Anhaften gebracht bzw. angeklebt ist, dadurch **gekennzeichnet,** daß der Waben- bzw. Zellenkern (30) aus einem thermisch leitfähigen nichtmetallischen Material, das imprägnierte Kohlenstoffteerfasern umfaßt bzw. enthält, hergestellt ist.

6. Schichtungs- bzw. Sandwichstruktur nach Anspruch 5, dadurch **gekennzeichnet,** daß der Kohlenteerfaser-Waben- bzw. -Zellenkern (30) eine Wärmeleitfähigkeit von 1,09 bis 2,05 W/m.K hat und daß der Kern (30) haftend bzw. mit Klebemittel an die Oberseiten- und Basisschicht (20, 38) gebunden ist.

7. Schichtungs- bzw. Sandwichstruktur nach irgendeinem der vorhergehenden Ansprüche, **gekennzeichnet** durch eine Isolationsschicht (45), die an der Basisschicht (38) zum Anhaften gebracht bzw. an die Basisschicht (38) angeklebt ist.

8. Verfahren zum Herstellen einer Schubumkehreinrichtungsinnenwand (10), umfassend die Schritte des Ausbildens eines thermisch leitfähigen Waben- bzw. Zellenkerns (30), des zum Anhaftenbringens bzw. Anklebens einer kohlenstoffaserverstärkten nichtmetallischen Basisschicht (38) an den Waben- bzw. Zellenkern (30) und des zum Anhaftenbringens bzw. Anklebens einer kohlenstoffaserverstärkten nichtmetallischen Oberseitenschicht (20) an den Waben- bzw. Zellenkern (30), dadurch **gekennzeichnet,** daß der Waben- bzw. Zellenkern (30) aus einem nichtmetallischen Material hergestellt ist, das imprägnierte Kohlenstoffteerfasern umfaßt bzw. enthält und eine hohe Wärmeleitfähigkeit hat.

9. Verfahren gemäß Anspruch 8, dadurch **gekennzeichnet,** daß als das Kohlenstoffteerfasermaterial (30) ein Material gewählt ist, welches eine Wärmeleitfähigkeit von 1,09 bis 2,05 W/m.K hat.

## Revendications

1. Paroi interne (10) d'inverseur de poussée comprenant une structure sandwich, dans laquelle la structure sandwich comprend une couche supérieure perforée non métallique (20) armée de fibres de carbone, une âme en nid d'abeilles (30) conductrice de l'électricité, et une couche non métallique de base (38) armée de fibres de carbone, caractérisée en ce que l'âme en nid d'abeilles (30) est formée d'un matériau non métallique contenant des fibres imprégnées de brai de carbone et ayant une conductibilité thermique élevée.

2. Paroi interne (10) d'inverseur de poussée selon la revendication 1, caractérisée en ce que l'âme en nid d'abeilles (30) à fibres de brai de carbone a une conductibilité thermique comprise entre 1,09 et 2,05 W/m.K.

3. Paroi interne (10) d'inverseur de poussée selon la revendication 1 ou 2, caractérisée en ce que la couche supérieure non métallique (20) armée de fibres de carbone comprend une étoffe de carbone imprégnée de résine époxyde.

4. Paroi interne (10) d'inverseur de poussée selon l'une quelconque des revendications précédentes, caractérisée par une couche d'isolation (45) collée à la couche de base (38).

5. Structure sandwich de paroi interne d'inverseur de poussée comprenant une couche supérieure (20), une âme en nid d'abeilles (30) ayant une surface supérieure et une surface inférieure (40), et une couche de base (38), la couche supérieure (20) comprenant une étoffe perforée armée de fibres de carbone et imprégnée de résine époxyde, la couche supérieure (20) étant collée par un dispositif adhésif (26) à la surface supérieure de l'âme en nid d'abeilles (30), la couche de base (38) comprenant une étoffe non perforée de carbone imprégnée de résine époxyde, la couche de base (38) étant collée par un dispositif adhésif (42) à la surface inférieure (40) de l'âme en nid d'abeilles (30), caractérisée en ce que l'âme en nid d'abeilles (30) est formée d'un matériau non métallique et conducteur de la chaleur comprenant des fibres de brai de carbone imprégnées.

6. Structure sandwich selon la revendication 5, caractérisée en ce que l'âme en nid d'abeilles (30) de fibres de brai de carbone a une conductibilité thermique comprise entre 1,09 et 2,05 W/m.K, et en ce que l'âme (30) est collée par adhérence aux couches supérieure et de base (20, 38).

7. Structure sandwich selon l'une quelconque des revendications précédentes, caractérisée par une couche isolante (45) collée à la couche de base (38).

8. Procédé de fabrication d'une paroi interne (10) d'inverseur de poussée, comprenant les étapes suivantes : la formation d'une âme en nid d'abeilles (30) conductrice de la chaleur, le collage d'une couche non métallique de base (38) armée de fibres de carbone sur l'âme en nid d'abeilles (30), et l'adhérence d'une couche supérieure perforée non métallique (20) armée de fibres de carbone à l'âme en nid d'abeilles (30), caractérisé en ce que l'âme en nid d'abeilles (30) est formée d'un matériau non métallique contenant des fibres imprégnées de brai de carbone et ayant une conductibilité thermique élevée.

9. Procédé selon la revendication 8, caractérisé en ce que le matériau sélectionné comme matériau (30) des fibres de brai de carbone a une conductibilité thermique comprise entre 1,09 et 2,05 W/m.K.
